# EUROPÄISCHE PATENTSCHRIFT

(11) **EP 2 574 485 B1**
(45) Veröffentlichungstag und Bekanntmachung des Hinweises auf die Patenterteilung: **09.11.2016**
(21) Anmeldenummer: 12184495.5
(22) Anmeldetag: 14.09.2012
(51) Int. Cl.: B60K 15/04, B60K 13/04, B60K 15/03, B23P 19/00, B65B 1/00, F01N 3/20

(54) **Einfüllvorrichtung**
Filling device
Dispositif de remplissage

(30) Priorität: 27.09.2011 DE 102011115144
(43) Veröffentlichungstag der Anmeldung: 03.04.2013
(73) Patentinhaber: VERITAS AG, 63571 Gelnhausen (DE)
(72) Erfinder: Wagner, Artur, 63599 Biebergemuend (DE)
(74) Vertreter: Patentship Patentanwaltsgesellschaft mbH

(56) Entgegenhaltungen:
- EP-A1- 2 316 685
- DE-A1-102008 034 672
- DE-U1-202010 001 147
- FR-A1- 2 875 748
- US-A1- 2004 256 522
- US-A1- 2007 163 673

## Beschreibung

Die vorliegende Erfindung bezieht sich auf eine Einfüllvorrichtung insbesondere zum Befüllen eines Tanks mit einer Harnstofflösung. Weiterhin betrifft die Erfindung einen Bausatz für eine Einfüllvorrichtung sowie zwei Verfahren zum Herstellen dieser Einfüllvorrichtung.

In vielen Kraftfahrzeugen ist es notwendig, eine Harnstofflösung mit sich zu führen, um eine Reduzierung von Stickoxiden in Katalysatoren zu ermöglichen. Dafür wird die Harnstofflösung in einem Tank gespeichert, welcher von Zeit zu Zeit wieder befüllt werden muss. Zum Befüllen des Tanks ist eine Einfüllvorrichtung notwendig, welche einen standardisierten Einfüllstutzen aufweist, um somit beispielsweise eine Flaschenbetankung mit Harnstoff durchführen zu können. Hierbei wird eine Flasche auf den standarisierten Einfüllstutzen geschraubt, so dass eine problemlose Befüllung erfolgen kann.

Um die Einfüllvorrichtung sicher im Fahrzeug mitführen zu können, muss diese an einem Karosserieabschnitt oder ähnlichem befestigt werden. Eine Möglichkeit zur Befestigung ist beispielsweise aus der US 4 573 694 bekannt, bei welcher eine Kraftstoffleitung mittels einer ringförmigen Klammer an einem Radkasten befestigt wird. Nachteilig hierbei ist, dass die Montage der Klammer zeitaufwendig ist und eine mangelnde Variabilität in Bezug zu verschiedenen Fahrzeugtypen vorliegt, so dass es bisweilen schwierig ist, geeignete Befestigungsstellen für die ringförmige Klammer zu finden.

In der US 2007/163673 A1 ist eine Einfüllvorrichtung zum Befüllen eines Tanks mit Harnstofflösung offenbart, wobei die Einfüllvorrichtung einen standardisierten Adapter aufweist.

In der EP 2 316 685 A1 ist ein Einfüllstutzen zum Befüllen eines Harnstofflösungstanks mittels einer Flasche, bzw. Zapfpistole, offenbart.

In der FR 2 875 748 A1 ist ein standardisierter Einfüllstutzen zum Befüllen eines Harnstofflösungstanks mittels einer Flasche oder Kartusche offenbart.

In der US 2004/256522 A1 ist ein Einfüllrohr offenbart, welches an einen Halter angeschweißt wird.

In der DE 10 2008 034 672 A1 ist ein Einfüllstutzen offenbart, an welchem ein Halter befestigt ist.

Es ist daher Aufgabe der vorliegenden Erfindung, eine Einfüllvorrichtung anzugeben, welche eine variable Befestigungsmöglichkeit vorsieht und somit in verschiedene Fahrzeugtypen leicht und kostensparend implementiert werden kann.

Diese Aufgabe wird mit den unabhängigen Ansprüchen der Erfindung gelöst.

Gemäß der Erfindung weist die Einfüllvorrichtung zumindest ein fahrzeugspezifisches Leitungselement, einen standardisierten Einfüllstutzen und einen Halter auf, wobei der Halter an dem fahrzeugspezifischen Leitungselement durch ein Fügeverfahren, insbesondere durch ein Schweißverfahren, welches an dem fahrzeugspezifischen Leitungselement angewendet wird, in axialer und/oder radialer und/oder in Umfangsrichtung des fahrzeugspezifischen Leitungselements fixiert ist, wobei das fahrzeugspezifische Leitungselement einen Aufnahmebereich aufweist, um einen Anbringungsabschnitt des Halters darin formschlüssig aufzunehmen und durch das Fügeverfahren der standardisierte Einfüllstutzen mit dem fahrzeugspezifischen Leitungselement verbunden ist.

Somit weist die Einfüllvorrichtung einen Halter auf, welcher in seiner Form für verschiedene Fahrzeugtypen anpassbar ist. Weiterhin ist der Halter an dem fahrzeugspezifischen Leitungselement bereits fixiert, so dass eine einfache und schnelle Montage der Einfüllvorrichtung insgesamt möglich ist.

Dadurch ist es möglich, den standardisierten Einfüllstutzen an dem fahrzeugspezifischen Leitungselement zu befestigen und gleichzeitig den Halter zu fixieren.

Durch dieses Verfahren wird der Anbringungsabschnitt des Halters an dem fahrzeugspezifischen Leitungselement fixiert.

Bevorzugt bestehen das fahrzeugspezifische Leitungselement und der standardisierte Einfüllstutzen aus Kunststoff und der Halter aus Metall. Der Kunststoff ermöglicht eine variable, d.h. fahrzeugspezifische Gestaltung und der Halter aus Metall bietet eine stabile Befestigung der Einfüllvorrichtung.

Vorteilhafterweise ist der Anbringungsabschnitt gabelförmig oder ringförmig ausgebildet und kann somit das fahrzeugspezifische Leitungselement zumindest abschnittsweise umschließen. Durch diese Ausgestaltung kann der Halter leicht an das fahrzeugspezifische Leitungselement angebracht werden.

Es kann das fahrzeugspezifische Leitungselement einen Aufnahmebereich aufweisen, um somit den gabelförmigen Anbringungsabschnitt des Halters formschlüssig aufzunehmen. Der Halter ist dadurch in dem Aufnahmebereich des fahrzeugspezifischen Leitungselements fixiert und es kann nachfolgend ein Schweißverfahren durchgeführt werden.

Bevorzugt schließt sich an den Anbringungsabschnitt des Halters ein vorzugsweise im Wesentlichen rechtwinklig angeordneter Stabilisierungsabschnitt an, welcher sich bevorzugt entlang des fahrzeugspezifischen Leitungselements erstreckt. Durch den Stabilisierungsabschnitt kann der Halter eine höhere Stabilität der Einfüllvorrichtung gewährleisten.

Bevorzugt weist der Halter mehrere gebogene Abschnitte auf, welche vorzugsweise mit vertieften Bereichen versehen sind. Durch diese Ausgestaltungen wird die Steifigkeit des Halters verbessert.

Die Erfindung bezieht sich auch auf einen Bausatz für eine Einfüllvorrichtung, gemäß einem der vorhergehenden Ansprüche, aufweisend zumindest ein fahrzeugspezifisches Leitungselement, einen standardisierten Einfüllstutzen und einen Halter. Der Bausatz stellt somit die Einzelteile für eine Herstellung der Einfüllvorrichtung zur Verfügung.

Bevorzugterweise beinhaltet der Bausatz zwei fahrzeugspezifische Leitungselemente, vorzugsweise drei, welche miteinander durch Fügeverfahren, insbesondere durch Schweißen, verbunden werden können. Durch diese modulare Bauweise kann die Einfüllvorrichtung besonders flexibel ausgelegt werden.

Die vorliegende Erfindung betrifft weiterhin ein Verfahren zum Herstellen der Einfüllvorrichtung gemäß einem der vorhergehenden Ansprüche, aufweisend die folgenden Schritte: Bereitstellen von zumindest einem fahrzeugspezifischen Leitungselement und eines Halters, Einsetzen des Halters in einen Aufnahmebereich des fahrzeugspezifischen Leitungselements und Fügen eines standardisierten Einfüllstutzens an das fahrzeugspezifische Leitungselement, um somit den Halter zu fixieren.

Dieses Verfahren ermöglicht die Herstellung einer Einfüllvorrichtung gemäß einer ersten Ausführungsform der vorliegenden Erfindung, wobei durch die Fixierung des standardisierten Einfüllstutzens auch der Halter an dem fahrzeugspezifischen Leitungselement fixiert wird.

Die Figuren zeigen:
- Figur 1:: eine Einfüllvorrichtung gemäß einer ersten Ausführungsform der Erfindung,
- Figur 2:: eine Explosionsdarstellung der ersten Ausführungsform der Erfindung,
- Figur 3: Figur 3:: zwei fahrzeugspezifische Leitungselemente in getrennter und in zusammengesetzter Anordnung,
- Figur 4:: einen Halter und eine Einfüllvorrichtung gemäß der ersten Ausführungsform,
- Figur 5:: einen standardisierten Einfüllstutzen und Einfüllvorrichtung gemäß der ersten Ausführungsform im zusammengesetzten Zustand,

Im Folgenden werden die einzelnen Ausführungsformen der Erfindung sowie die Verfahren zur Herstellung der Einfüllvorrichtung näher erläutert.

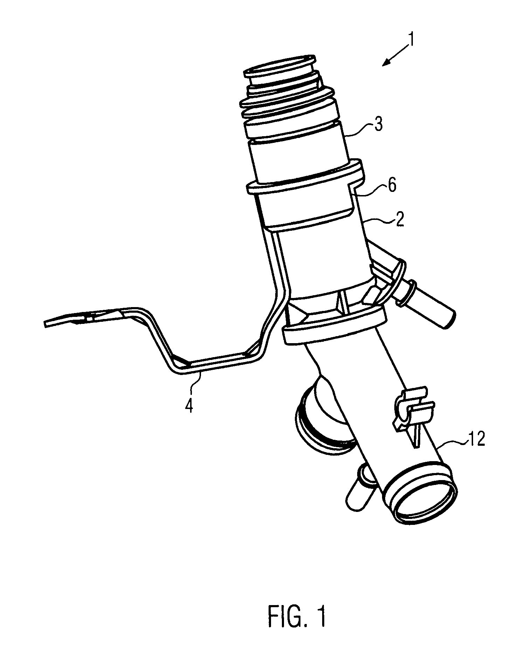

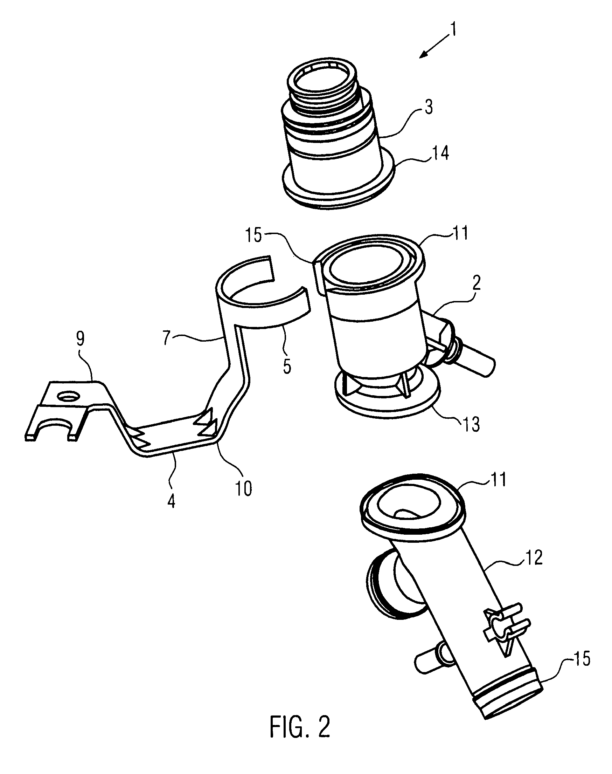

Die Figuren 1 und 2 zeigen eine erste Ausführungsform der vorliegenden Erfindung. Gemäß der Figur 2 ist ein standardisierter Einfüllstutzen 3, ein fahrzeugspezifisches Leitungselement 2, ein weiteres fahrzeugspezifisches Leitungselement 12 und ein Halter 4 vorgesehen. Der standardisierte Einfüllstutzen 3 besitzt an seinem unteren Ende einen ringförmigen Fügeabschnitt 14 und an seinem oberen Ende ein Gewinde, so dass eine genormte Flasche auf den standardisierten Einfüllstutzen 3 geschraubt werden kann, um eine Harnstofflösung in einen Tank nachzufüllen. Der standardisierte Einfüllstutzen 3 besitzt eine im Wesentlichen zylindrische Struktur, welche rohrförmig ausgebildet ist. Weiterhin besteht der standardisierte Einfüllstutzen 3 aus einem Kunststoff, welcher verschweißbar ist und es kann z.B. Ultraschallschweißen angewendet werden. Der Fügeabschnitt 14 des Einfüllstutzens 3 ist in einen oberen Fügeabschnitt 11 des fahrzeugspezifischen Leitungselements 2 einsetzbar, wobei der obere Fügeabstand 11 eine Aussparung 15 aufweist. Außerdem ist der obere Fügeabschnitt 11 ringförmig ausgebildet und beinhaltet einen Aufnahmebereich 6, wie aus der Figur 1 zu sehen. Ein Anbringungsabschnitt 5 des Halters 4 ist in den Aufnahmebereich 6 des fahrzeugspezifischen Leitungselements 2 einsetzbar.

Der Halter 4 weist den Anbringungsabschnitt 5 auf, welcher gabelförmig ausgeführt ist. Senkrecht zum Anbringungsabschnitt 5 erstreckt sich ein Stabilisierungsabschnitt 7, welcher an dem fahrzeugspezifischen Leitungselement anliegt. Der Stabilisierungsabschnitt 7 kann sich auch in einem anderen Winkel zum Anbringungsabschnitt 5 erstrecken. Beispielsweise kann der Winkel 180° betragen. Weiterhin hat der Halter 4 mehrere gebogene Abschnitte 9 und jeder gebogene Abschnitt 9 hat zwei vertiefte Bereiche 10. Die vertieften Bereiche 10 sind nicht unbedingt erforderlich, so dass die gebogenen Abschnitte 9 auch ohne diese denkbar sind. Weiterhin kann sich der Stabilisierungsabschnitt 7 von einer beliebigen Richtung aus von dem Anbringungsabschnitt 5 erstrecken, je nach Gegebenheit des zur Verfügung stehenden Bauraums.

Der Halter 4 ist aus Metall gefertigt, jedoch ist auch eine Ausführung aus Kunststoff denkbar. Wie aus der Figur 2 zu sehen, ist ein weiteres fahrzeugspezifisches Leitungselement 12 vorgesehen, mit einem oberen Fügeabschnitt 11 und einem unteren Fügeabschnitt 13.

Der untere Fügeabschnitt 13 des weiteren fahrzeugspezifischen Leitungselements 12 kann zur Aufnahme eines Schlauches oder ähnliches dienen. Weiterhin beinhaltet das weitere fahrzeugspezifische Leitungselement 12 einzelne Vorsprünge zur Befestigung von Kabeln etc. und es kann eine Abzweigung für eine Entlüftung oder dergleichen vorgesehen sein.

Die Figur 1 zeigt die zusammengesetzte Struktur der Einfüllvorrichtung, bei der alle Bauteile gemäß der Figur 2 zusammengesetzt sind. Es ist zu erkennen, dass der standardisierte Einfüllstutzen 3 fest mit dem fahrzeugspezifischen Leitungselement 2 verbunden ist und der eingesetzte Halter 4 sich entlang des fahrzeugspezifischen Leitungselements 2 erstreckt.

In dem zusammengesetzten Zustand ist der Fügeabschnitt 14 des standardisierten Einfüllstutzens 3 mit dem oberen Fügeabschnitt 11 des fahrzeugspezifischen Leitungselements 2 verbunden und der untere Fügeabschnitt 13 des fahrzeugspezifischen Leitungselements 2

ist mit dem oberen Fügeabschnitt 11 des weiteren fahrzeugspezifischen Leitungselements 12 verbunden.

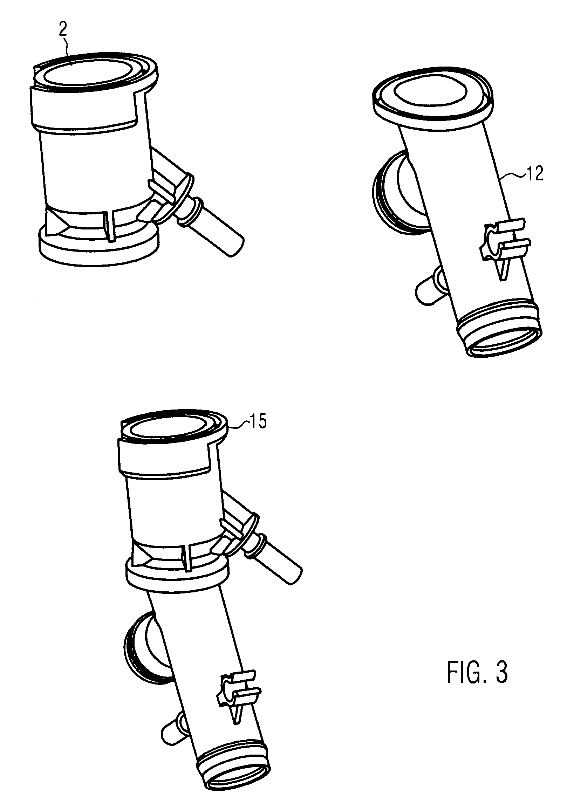

Die Figur 3 zeigt die beiden fahrzeugspezifischen Leitungselemente 2 und 12 einzeln und in einem zusammengesetzten bzw. verschweißten Zustand.

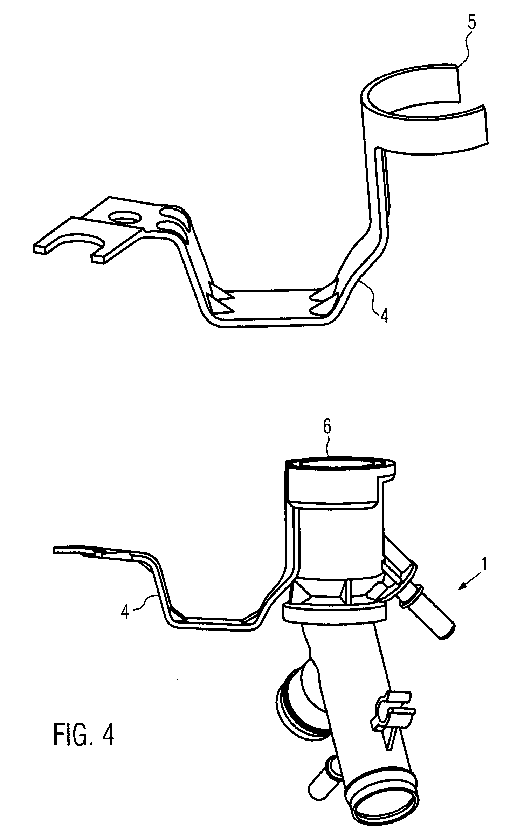

Die Figur 4 offenbart den einzelnen Halter 4 gemäß der ersten Ausführungsform der Erfindung. Das untere Bild der Figur 4 zeigt die Einfüllvorrichtung ohne den standardisierten Einfüllstutzen 3, wobei der Halter 4 in die Aussparung 15 des fahrzeugspezifischen Leitungselements 2 eingesetzt ist. In diesem Zustand ist der Halter 4 bereits in einer Umfangsrichtung fixiert, da die Aussparung 15 eine Verdrehung nicht gestattet.

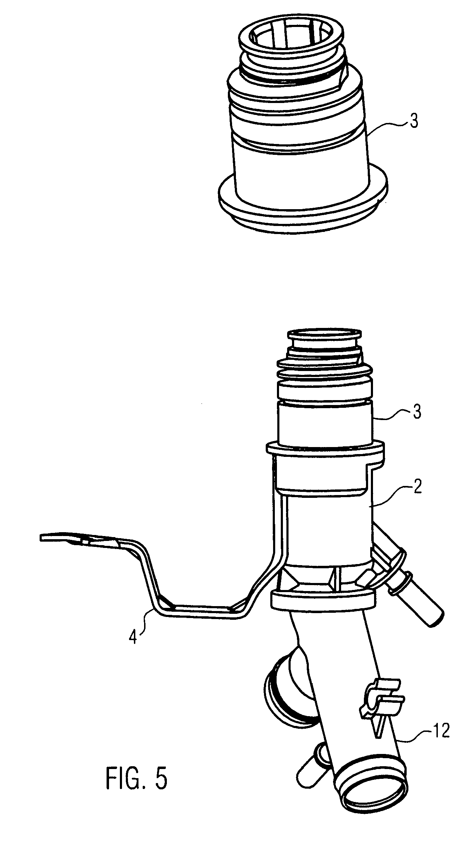

Nachdem der Halter 4 in den Aufnahmebereich 6 eingesteckt worden ist, kann der standardisierte Einfüllstutzen 3 gemäß der Figur 5 eingesetzt und verschweißt werden.

Um die Einfüllvorrichtung gemäß der ersten Ausführungsform der Erfindung herzustellen, wird das fahrzeugspezifische Leitungselement 2 in das weitere fahrzeugspezifische Leitungselement 12 eingesetzt, so dass der obere Fügeabschnitt 11 in den unteren Fügeabschnitt 13 eingreift.

Die beiden Fügeabschnitte 11 und 13 werden sodann umfänglich miteinander verschweißt, beispielsweise durch Ultraschallschweißen. Danach wird der Halter 4 in das fahrzeugspezifische Leitungselement 2 eingesetzt, wobei insbesondere der Anbringungsabschnitt 5 des Halters in den Aufnahmebereich 6 eingesetzt wird und der Stabilisierungsabschnitt 7 zu der Aussparung 15 ausgerichtet ist. Der Halter 4 ist somit in dieser Position gegen eine Verdrehung gesichert und er ist in einer Längsrichtung des fahrzeugspezifischen Leitungselements 2 fixiert.

Als letzter Schritt wird der standardisierte Einfüllstutzen 3 auf das fahrzeugspezifische Leitungselement 2 gesetzt, wobei der obere Fügeabschnitt 11 in den Fügeabschnitt 14 des Einfüllstutzens greift und die beiden Fügeabschnitte 11 und 14 werden miteinander verschweißt. Die Verschweißung kann wie zuvor durch z.B. ein Ultraschallschweißverfahren erfolgen. Nach diesem Schweißvorgang ist der Halter 4 auch in einer Umfangsrichtung fixiert.

Die so hergestellte Einfüllvorrichtung weist einen modularen Aufbau auf und kann als gesamte Baugruppe an einem Fahrzeug montiert werden.

### Bezugszeichenliste:

- 1: Einfüllvorrichtung
- 2: fahrzeugspezifisches Leitungselement
- 3: standardisierter Einfüllstutzen
- 4: Halter
- 5: Anbringungsabschnitt
- 6: Aufnahmebereich
- 7: Stabilisierungsabschnitt
- 8: Öffnung
- 9: gebogener Abschnitt
- 10: vertiefter Bereich
- 11: oberer Fügeabschnitt
- 12: weiteres fahrzeugspezifisches Leitungselement
- 13: unterer Fügeabschnitt
- 14: Fügeabschnitt des Einfüllstutzens
- 15: Aussparung
- 16: Vorsprung

## Patentansprüche

1. Einfüllvorrichtung (1), insbesondere zum Befüllen eines Tanks mit einer Harnstofflösung, aufweisend:
zumindest ein fahrzeugspezifisches Leitungselement (2), einen standardisierten Einfüllstutzen (3) und einen Halter (4), wobei der Halter (4) an dem fahrzeugspezifischen Leitungselement (2) durch ein Fügeverfahren, insbesondere durch ein Schweißverfahren, welches an dem fahrzeugspezifischen Leitungselement (2) angewendet wird, in axialer und/oder radialer und/oder in Umfangsrichtung des fahrzeugspezifischen Leitungselements (2) fixiert ist, wobei
das fahrzeugspezifische Leitungselement (2) einen Aufnahmebereich (6) aufweist, um einen Anbringungsabschnitt (5) des Halters (4) darin formschlüssig aufzunehmen und durch das Fügeverfahren der standardisierte Einfüllstutzen (3) mit dem fahrzeugspezifischen Leitungselement (2) verbunden ist.

2. Einfüllvorrichtung (1) nach zumindest einem der vorhergehenden Ansprüche, **dadurch gekennzeichnet, dass** das fahrzeugspezifische Leitungselement (2) und der standardisierte Einfüllstutzen (3) aus Kunststoff bestehen und der Halter (4) aus Metall besteht.

3. Einfüllvorrichtung (1) nach zumindest einem der vorhergehenden Ansprüche, **dadurch gekennzeichnet, dass** der Anbringungsabschnitt (5) gabelförmig oder ringförmig ausgebildet ist und zumindest abschnittsweise das fahrzeugspezifische Leitungselement (2) umschließt.

4. Einfüllvorrichtung (1) nach zumindest einem der vorhergehenden Ansprüche, **dadurch gekennzeichnet, dass** sich an den Anbringungsabschnitt (5) ein vorzugsweise im Wesentlichen rechtwinklig angeordneter Stabilisierungsabschnitt (7) anschließt, welcher sich entlang des fahrzeugspezifischen Leitungselements (2) erstreckt.

5. Einfüllvorrichtung (1) nach zumindest einem der vorhergehenden Ansprüche, **dadurch gekennzeichnet, dass** der Halter (4) mehrere gebogene Abschnitte (9) aufweist, welche vorzugsweise mit vertieften Bereichen (10) versehen sind.

6. Bausatz für eine Einfüllvorrichtung (1) gemäß einem der vorhergehenden Ansprüche, aufweisend:
zumindest ein fahrzeugspezifisches Leitungselement (2), einen standardisierten Einfüllstutzen (3) und einen Halter (4), **dadurch gekennzeichnet, dass** zwei fahrzeugspezifische Leitungselemente (2) vorgesehen sind, vorzugsweise drei, welche miteinander durch Fügeverfahren, insbesondere durch Schweißen, verbunden werden können.

7. Verfahren zum Herstellen einer Einfüllvorrichtung (1) gemäß einem der Ansprüche 1 bis 5, aufweisend die folgenden Schritte:
Bereitstellen von zumindest einem fahrzeugspezifischen Leitungselement (2) und einem Halter (4),
Einsetzen des Halters (4) in einen Aufnahmebereich (6) des fahrzeugspezifischen Leitungselements (2) und
Fügen eines standardisierten Einfüllstutzens (3) an das fahrzeugspezifische Leitungselement (2), um somit den Halter (4) zu fixieren.

## Claims

1. Filling device (1), in particular for filling a reservoir with a solution of urea, comprising:
at least one vehicle-specific pipe element (2), one standardized filler neck (3), and one holder (4), wherein the holder (4) is fixed to the vehicle-specific pipe element (2) in an axial direction and/or radial direction and/or circumferential direction of the vehicle-specific pipe element (2) by means of a joining method, in particular by means of a welding method, which is applied to the vehicle-specific pipe element (2), wherein
the vehicle-specific pipe element (2) comprises a receiving section (6) for positively receiving a mounting section (5) of the holder (4) therein and the standardized filler neck (3) is connected to the vehicle-specific pipe element (2) by means of the joining method.

2. The filling device (1) according to at least one of the preceding claims, **characterized in that** the vehicle-specific pipe element (2) and the standardized filler neck (3) are made of plastic material, and the holder (4) is made of metal.

3. The filling device (1) according to at least one of the preceding claims, **characterized in that** the mounting section (5) is designed in a fork shape or ring shape and it encloses the vehicle-specific pipe element (2) at least section-wise.

4. The filling device (1) according to at least one of the preceding claims, **characterized in that** a stabilizing section (7), which is preferably arranged in a substantially rectangular manner and extends along the vehicle-specific pipe element (2), connects to the mounting section (5).

5. The filling device (1) according to at least one of the preceding claims, **characterized in that** the holder (4) has several curved sections (9), which are preferably provided with recessed areas (10).

6. Construction kit for a filling device (1) according to any one of the preceding claims, comprising:
at least one vehicle-specific pipe element (2), a standardized filler neck (3) and a holder (4), **characterized in that** two vehicle-specific pipe elements (2), preferably three, are provided, which can be connected to each other by means of a joining method, in particular by means of a welding method.

7. Method for producing a filling device (1) according to any one of the preceding claims 1 to 5, comprising the following steps:
providing at least a vehicle-specific pipe element (2) and a holder (4);
inserting the holder (4) in a receiving section (6) of the vehicle-specific pipe element (2); and
adding a standardized filler neck (3) to the vehicle-specific pipe element (2) in order to fix the holder (4).

## Revendications

1. Dispositif de remplissage (1), en particulier pour remplir un réservoir avec une solution d'urée, comportant:
au moins un élément de conduit (2) spécifique de véhicule, un embout de remplissage standardisé (3) et un support (4), le support (4) étant fixé à l'élément de conduit (2) spécifique de véhicule dans une direction axiale et/ou direction radiale et/ou direction circonférentielle de l'élément de conduit (2) spécifique de véhicule par un procédé d'assemblage, en particulier par un procédé de soudure, qui est appliqué à l'élément de conduit (2) spécifique de véhicule, dans lequel
l'élément de conduit (2) spécifique de véhicule comporte une zone de réception (6) pour recevoir une section de montage (5) du support (4) dans celui-ci par engagement positif, et l'embout de remplissage standardisé (3) est connecté à l'élément de conduit (2) spécifique de véhicule par le procédé d'assemblage.

2. Dispositif de remplissage (1) selon au moins l'une des revendications précédentes **caractérisé en ce que** l'élément de conduit (2) spécifique de véhicule et l'embout de remplissage standardisé (3) sont constitués de matière plastique et le support (4) est constitué de métal.

3. Dispositif de remplissage (1) selon au moins l'une des revendications précédentes **caractérisé en ce que** la section de montage (5) est réalisée en forme de fourche ou en forme d'anneau et entoure au moins par endroits l'élément de conduit (2) spécifique de véhicule.

4. Dispositif de remplissage (1) selon au moins l'une des revendications précédentes **caractérisé en ce qu'**une section de stabilisation (7), étant préférablement arrangée essentiellement de façon rectangulaire et qui s'étend le long de l'élément de conduit (2) spécifique de véhicule, se connecte à la section de montage (5).

5. Dispositif de remplissage (1) selon au moins l'une des revendications précédentes **caractérisé en ce que** le support (4) présente plusieurs sections courbées (9), qui préférablement sont pourvus de régions évidées (10).

6. Kit de construction pour un dispositif de remplissage (1) selon l'une des revendications précédentes, comportant:
au moins un l'élément de conduit (2) spécifique de véhicule, un embout de remplissage standardisé (3) et un support (4), **caractérisé en ce que** deux éléments de conduit (2) spécifique de véhicule, préférablement trois, sont prévus, qui peuvent être connectés les uns aux autres par un précédé d'assemblage, en particulier par soudure.

7. Procédé pour fabriquer un dispositif de remplissage (1) selon l'une des revendications 1 à 5, comportant les étapes suivantes:
fournir au moins un l'élément de conduit (2) spécifique de véhicule et un support (4);
insérer le support (4) dans une zone de réception (6) de l'élément de conduit (2) spécifique de véhicule; et
ajouter un embout de remplissage standardisé (3) à l'élément de conduit (2) spécifique de véhicule afin de fixer le support (4).
